# EUROPEAN PATENT APPLICATION

(11) **EP 2 711 811 A2**
(43) Date of publication of application: **26.03.2014**
(21) Application number: 13184854.1
(22) Date of filing: 17.09.2013
(51) Int. Cl.: G06F 3/023, G06F 9/44, G06F 3/0488

(54) **Electronic apparatus, method of key inputting and computer-readable recording medium**

(30) Priority: 24.09.2012 KR 20120105936
(71) Applicant: Samsung Electronics Co., Ltd, Gyeonggi-do 443-742 (KR)
(72) Inventor: Park, Seong-kook, Gyeonggi-do (KR)
(74) Representative: Taor, Simon Edward William

(57) **Abstract**

An electronic apparatus includes a user interface to display a key input region on a touch screen, a converter to output a key value corresponding to the touch region as a keyboard signal when a touch is input on the key input region, , and a controller to execute an event corresponding to the output keyboard signal.

## Description

The present general inventive concept relates generally to an electronic apparatus, a key input method, and a computer-readable recording medium. More particularly, the present general inventive concept relates to an electronic apparatus to input a key and display a key input region instead of a blank or shaded screen, a key input method, and a computer-readable recording medium.

A conventional computer system includes various input devices to input a control command of a user. Among such input devices, a keyboard is most commonly used.

Meanwhile, a portable device such as a tablet personal computer (PC), which emphasizes portability, does not include the keyboard. Instead, the tablet PC displays a keyboard in a certain region of a screen and supports a touchscreen function to receive a user's touch as a keyboard input on the displayed keyboard.

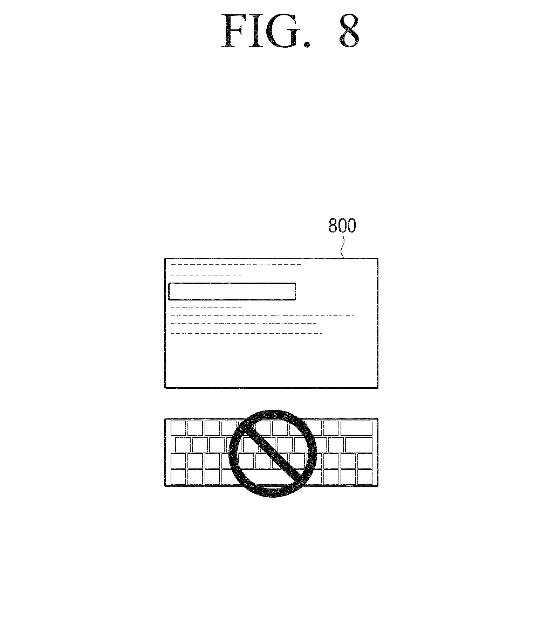

However, a conventional touchscreen keyboard is driven by an application program, which prevents the user from using the keyboard until an operating system is loaded. However, referring to FIG. 8, the application program installed within a tablet PC 800 does not operate during Windows installation or during BitLocker booting, and therefore the user cannot use the conventional touchscreen keyboard at all times.

The present general inventive concept provides an electronic apparatus to input a key display a key input region instead of a blank or shaded screen, a key input method, and a computer-readable recording medium.

Additional features and utilities of the present general inventive concept will be set forth in part in the description which follows and, in part, will be obvious from the description, or may be learned by practice of the general inventive concept.

The foregoing and/or other features and utilities of the present general inventive concept are achieved by providing an electronic apparatus including a user interface to display a key input region on a touch screen, a converter to output a key value corresponding to the touch region as a keyboard signal when a touch is input on the key input region, and a controller to execute an event corresponding to the output keyboard signal.

The converter may receive a keyboard signal from an external keyboard and forward the input keyboard signal to the controller, and the converter may receive a key value corresponding to the touch region and provide a keyboard signal corresponding to the input key value to the controller.

When a preset region is input on the touch screen, the user interface may display the key input region.

The electronic apparatus may further include an input part to receive a display command of the key input region using a physical switch, such that when the display command is input through the input part, the user interface may display the key region.

The key input region may be in a form of a keyboard.

The keyboard signal may be a keyboard scancode.

The converter may be a MICOM which supports a PS/2 interface.

When the touch is input on the touch screen, the user interface may output coordinates of the touch screen of the touched region, such that the converter may extract a key value corresponding to the coordinates of the touch screen, convert the extracted key value to a keyboard signal, and output the keyboard signal.

The foregoing and/or other features and utilities of the present general inventive concept may also be achieved by providing a key input method in an electronic apparatus including displaying a key input region on a touch screen, inputting a touch on the key input region, converting a key value corresponding to the touch region to a keyboard signal, and executing an event corresponding to the keyboard signal.

When a preset region is input on the touch screen, the displaying operation may display the key input region.

When a display command is input through using a physical switch of the electronic apparatus, the displaying operation of the key input region may display the key input region.

The key input region may be in a form of a keyboard.

The keyboard signal may be a keyboard scancode.

The key input method may further include when the touch is input on the touch screen, outputting coordinates of the touch screen of the touched region, and extracting a key value corresponding to the coordinates of the touch screen.

The foregoing and/or other features and utilities of the present general inventive concept may also be achieved by providing a non-transitory computer-readable recording medium having embodied thereon a program to execute a key input method of an electronic apparatus, such that the method includes displaying a key input region on a touch screen, inputting a touch on the key input region, converting a key value corresponding to the touch region to a keyboard signal, and executing an event corresponding to the keyboard signal.

The foregoing and/or other features and utilities of the present general inventive concept may also be achieved by providing a an electronic apparatus, including a user interface to display a key input region on a touch screen in response to a user touching a preset region of the touch screen at any time during a powered-on state of the electronic apparatus, a converter to receive an input key value corresponding to the touch of the preset region and to convert the input key value to a keyboard signal, and a controller to control the user interface to activate and display the key input region on the touch screen based on the keyboard signal.

The key input region may include a keyboard to allow a user to select individual keys via a touch input.

The user interface may display a cursor region to display the keys selected by the user.

The preset region of the touch screen may be a region other than the key input region and the cursor region.

The electronic apparatus may further include an input part to receive a display command to display the key input region via a toggle of a physical switch, such that the controller controls the user interface to display the key input region based on the toggle of the physical switch.

The keyboard signal may be a keyboard scancode.

These and/or other features and utilities of the present general inventive concept will become apparent and more readily appreciated from the following description of the embodiments, taken in conjunction with the accompanying drawings of which:
FIG. 1 is a block diagram of an electronic apparatus according to an exemplary embodiment of the present general inventive concept;
FIG. 2 is a detailed diagram of a controller of FIG. 1;
FIG. 3 is a diagram of a key input region displayed;
FIG. 4 is a diagram of operations of a conversion MICOM 155 of FIG. 2;
FIG. 5 is a diagram of operations of a S/W keyboard module 153 of FIG. 2;
FIG. 6 is a diagram of conversion operations of the controller of FIG. 1;
FIG. 7 is a flowchart of a key input method according to an exemplary embodiment of the present general inventive concept; and
FIG. 8 is a diagram of a shortcoming of a conventional method.

Reference will now be made in detail to the embodiments of the present general inventive concept, examples of which are illustrated in the accompanying drawings, wherein like reference numerals refer to the like elements throughout. The embodiments are described below to explain the present general inventive concept by referring to the figures.

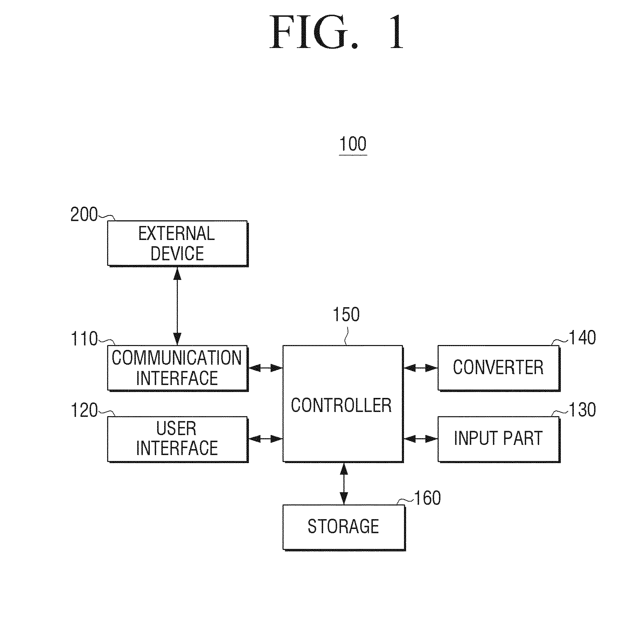

FIG. 1 is a block diagram of an electronic apparatus 100 according to an exemplary embodiment of the present general inventive concept.

Referring to FIG. 1, the electronic apparatus 100 includes a communication interface 110, a user interface 120, an input part 130, a converter 140, and a controller 150. Herein, the electronic apparatus 100 may include a PC, a notebook, a tablet PC, and a mobile phone with a touch screen, but is not limited thereto.

The communication interface 110 connects the electronic apparatus 100 to an external device 200, and can access the external device 200 not only over a Local Area Network (LAN) and the Internet, but also using a wireless communication scheme (e.g., GSM, UMTS, LTE, and WiBro).

The user interface 120 includes a plurality of function keys to allow a user to set or select various functions supported by the electronic apparatus 100, and displays various information provided from the electronic apparatus 100. The user interface 120 can be implemented using a touch screen 121 that processes an input and an output simultaneously. Nevertheless, the user interface 120 may also include an additional input means such as keyboard, mouse, and touchpad, and an additional display means such as monitor.

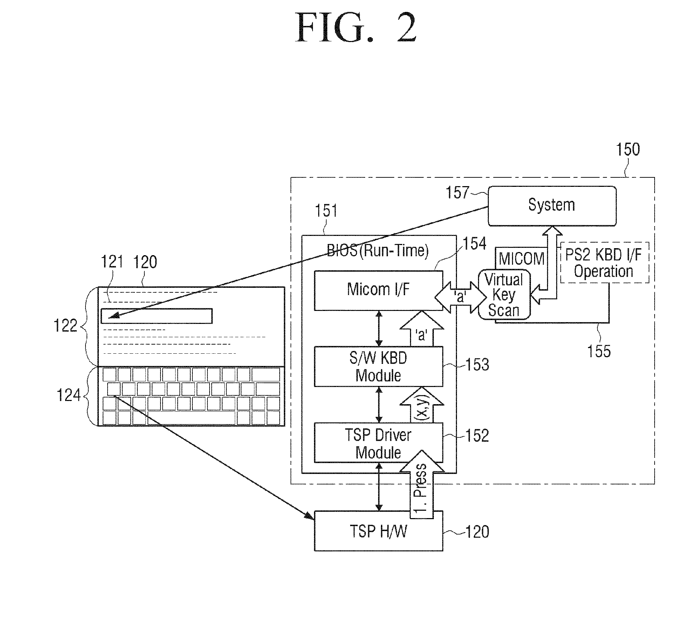

The user interface 120 displays a key input region 124 on the touch screen 121, as illustrated in FIG. 2. In detail, the user interface 120 can display the key input region 124 to select a preset region (e.g., a lower left region or a lower right region on the touch screen 121) of the touch screen 121 or to receive a display command through the input part 130. The key input region 124 can include a plurality of keys (e.g., a QWERTY keyboard) in a form of a keyboard. While exemplary embodiments of the present general inventive concept are directed to the QWERTY keyboard being displayed, a keyboard displayed on a smart phone or a keypad showing number keys may be displayed alternatively. Herein, the touch screen 121 indicates a display including an input device to receive a touch from the user's hand. The key input region 124 can be displayed through BIOS of the electronic apparatus 100, which shall be described by referring to FIG. 2.

When receiving the touch input on the touch screen 121, the user interface 120 outputs coordinates corresponding to the input touch region. The coordinate output is a basic operation of the touch screen 121 and thus shall be omitted. Herein, the output coordinates can be provided to the converter 140.

The input part 130 receives a display command of the key input region 124. In detail, the input part 130 includes a physical switch and may receive the display command of the key input region 124 through the physical switch. When a preset region of the touch screen 121 receives a user input, the input part 130 may regard the input as the input of the display command. When the display command is input, the user interface 120 can display the key input region 124. When receiving the display command while the key input region 124 is displayed, the user interface 120 may abort the display of the key input region 124.

When the touch is input on the key input region 124, the converter 140 outputs a key value corresponding to the touch region as a keyboard signal (i.e., a scancode). In detail, when receiving a keyboard signal via a Personal System 2 (PS/2₎ interfacing from an external keyboard, the converter 140 provides the received keyboard signal to the controller 150. When receiving the key value corresponding to the touch region from the user interface 120, the converter 140 may convert the input key value to the keyboard signal (scancode) and provide the converted keyboard signal to the controller 150 using the PS/2 interfacing. Herein, the keyboard signal is the keyboard scancode. The converter 140 can be a MICOM that supports the PS/2 interface.

While the converter 140 receives the key value from the user interface 120, the converter 140 may receive the coordinate value of the touch screen 121 from the user interface 120 in the implementation. In this case, the converter 140 can additionally extract the key value using the input coordinate value. Meanwhile, the key value can be extracted by a separate component (e.g., the BIOS), rather than the converter 140.

The storage 160 stores a program to drive the electronic apparatus 100. In detail, the storage 160 can store the program that is set of various instructions required to drive the electronic apparatus 100. Herein, the program includes a Master Boot Record (MBR) and the operating system. The storage 160 can store an image corresponding to the key input region 124. The storage 160 can be implemented using a storage medium in the electronic apparatus 100, and an external storage medium, for example, a removable disk including a USB memory and a flash memory, a storage medium connected to the electronic apparatus 100, and a web server over the network.

The controller 150 controls the components of the electronic apparatus 100. In detail, when the preset region of the key input region 124 is input or the display command is input through the input part 130, the controller 150 can control the user interface 120 to display the key input region 124. When the touch is input on the displayed key input region 124, the controller 150 can control the converter 140 to output the key value corresponding to the input touch region as the keyboard signal, and execute an event corresponding to the output keyboard signal. For example, when the user selects a region "a" on the key input region 124, the controller 150 may control the touch screen 121 to display "a" in a cursor region 122.

As such, the electronic apparatus 100 displays the key input region 124 using the hardware and outputs the keyboard signal corresponding to the touch when the touch is input on the displayed key input region 124. Thus, the touchscreen keyboard can be provided instead of a blank or shaded screen.

While the converter 140 and the controller 150 are depicted in FIG. 1 as separate components, the converter 140 and the controller 150 can be united as a single component during implementation of the present general inventive concept, which is explained by referring to FIG. 2.

FIG. 2 is a detailed diagram of the controller 150 of FIG. 1.

Referring to FIG. 2, the controller 150 can include a BIOS 151, a conversion MICOM 155, and a system 157.

The BIOS 151 manages the basic data input and output of the electronic apparatus 100. In detail, the BIOS 151 regulates an operation state of each chipset in the electronic apparatus 100, and adjusts a clock of a CPU or a memory.

When receiving the coordinate value corresponding to the touch from the touch screen 121, the BIOS 151 extracts the corresponding key value by comparing the key coordinates on the key input region 124 with the received coordinate value. The BIOS 151 sends the extracted key value to the conversion MICOM 155 through the interface. The BIOS 155 can display the key input region 124 and send the key value in a run-time routine.

In detail, the BIOS 151 can include a telephony service provider (TSP) driver module 152, a software (S/W) keyboard module 153, and a MICOM interface (I/F) 154.

The TSP driver module 152 outputs the coordinate value corresponding to the user touch region in response to a user pressing the TSP hardware (H/W) of the user interface 120.

The S/W keyboard module 153 displays the key input region 124 at a preset position of the touch screen 121. More specifically, when the lower left region or the lower right region of the touch screen 121 is input or the display command is input through the input part 130, the S/W keyboard module 153 can display the QWERTY keyboard at the preset position of the touch screen 121. Herein, the preset position can be a lower region of the touch screen 121. The display region can change in accordance with rotation of the electronic apparatus 100.

Upon receiving the coordinate value from the TSP driver module 152, the S/W keyboard module 153 extracts the corresponding key value by comparing the received coordinate value with the key coordinates of the key input region 124. For example, when the received coordinate value is coordinates of the display region a of the QWERTY keyboard, 'a' can be extracted as the key value.

The MICOM I/F 154 forwards the extracted key value to the conversion MICOM 155 which is a different chip set in the electronic apparatus 100.

The conversion MICOM 155 operates as if the electronic apparatus 100 includes no internal keyboard (i.e., PS2 keyboard I/F operation). In detail, without the internal keyboard, the key value can be received in association with the external S/W keyboard module 153. Hence, to perform keyboard emulation using the PS2 keyboard I/F, the conversion MICOM 155 can perform the PS2 keyboard interface as if the internal keyboard is included.

Accordingly, the conversion MICOM 155 can forward the key value from the MICOM I/F 154 to the system 157 via the PS2 interface.

The system 157 receives the key value through the PS2 interface, that is, operates the same as the internal keyboard exists.

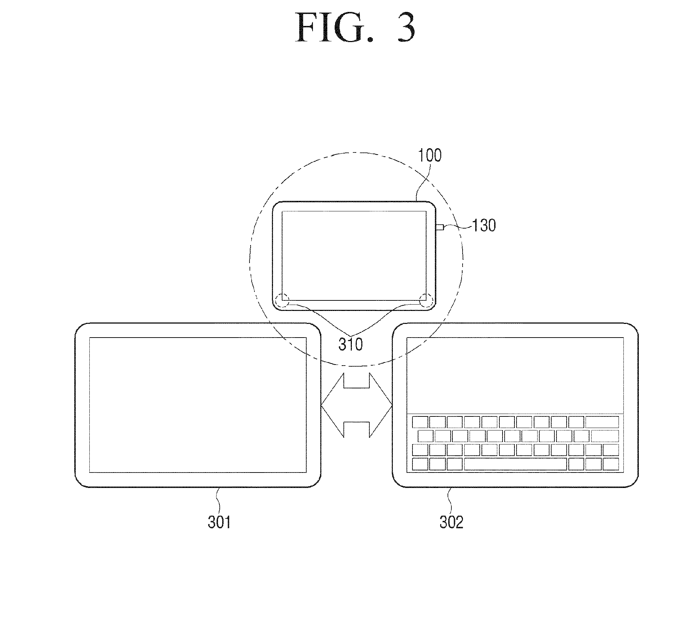

FIG. 3 is a diagram of the display of the key input region 124 of FIG. 2.

Referring to FIG. 3, when a preset region 310 of the touch screen 121 is input, the electronic apparatus 100 can regard it as the display command input of the key input region 124 and change the display state of a user interface window from a first state 301 to a second state 302. Herein, the first state 301 does not display the key input region 124, and the second state 302 displays the key input region124 in the preset region of the touch screen 121.

Meanwhile, when the electronic apparatus 100 includes a separate physical switch to allow a user to input the display command of the key input region 124 and a switch command is input through the corresponding physical switch, the electronic apparatus 100 can change the display state of the user interface window from the first state 301 to the second state 302. When the switch command is input in the second state 302, the electronic apparatus 100 can switch from the second state 302 to the first state 301.

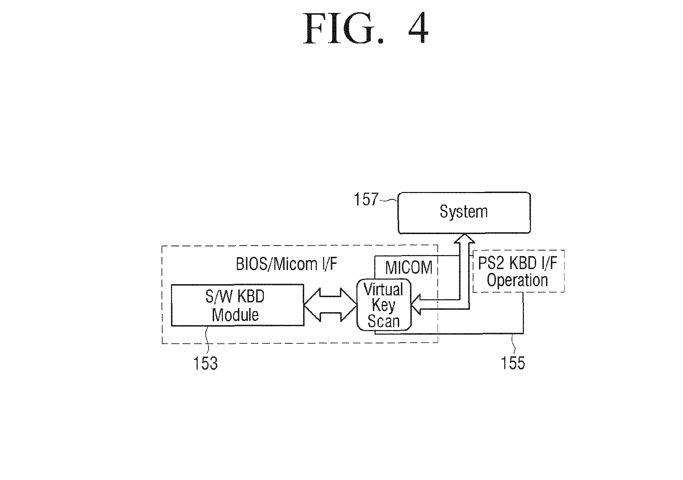

FIG. 4 is a diagram of operations of the conversion MICOM 155 of FIG. 2.

The conversion MICOM 155 can be implemented using an Embedded Controller (EC) and operates as if the internal keyboard is equipped. That is, the conversion MICOM 155 operates a software keyboard (or a touchscreen keyboard) like the internal keyboard. In detail, a conventional keyboard connected to a PC basically supports the PS2 keyboard operation, whereas recent tablet devices without the internal keyboard do not use the corresponding function.

Hence, when the key value is forwarded from the S/W keyboard module 153 via the MICOM I/F 154, the conversion MICOM 155 can convert the input key value to the scancode and provide the converted scancode to the system 157 using the PS2 keyboard interfacing (specifically, send the scancode to port 60h).

Since the key is generated through the standard PS2 interface, the keyboard input can be used when it is necessary in a disc operating system (DOS) or Pre-OS.

In a NikeTab model that supports only touch UI without supporting the keyboard, a normal PIN value can be input in a Windows BitLocker trusted platform module (TPM) personal identification number (PIN) input environment.

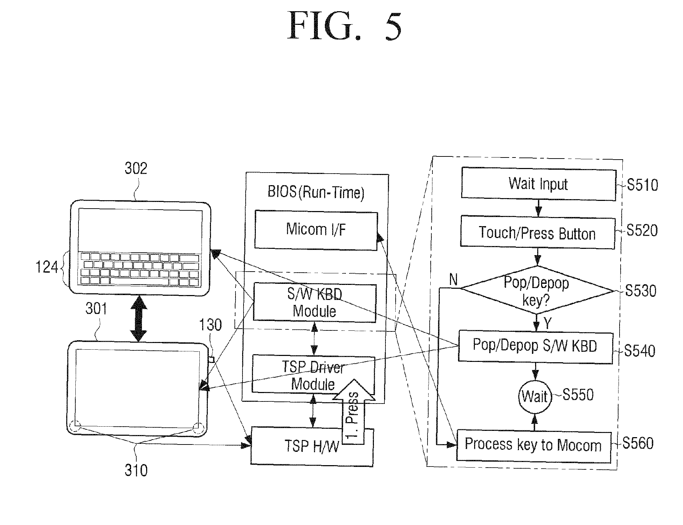

FIG. 5 is a diagram of operations of the S/W keyboard module 153 of FIG. 2.

Referring to FIG. 5, the S/W keyboard module 153 waits to receive the user's control (S510).

Upon receiving the command from the user (S520), the S/W keyboard module 153 determines whether the input command is the display command (S530). When the input command is the display command (S530-Y), the S/W keyboard module 153 can display the key input region 124 in the preset region 310 of the touch screen 121 (S540). Next, the S/W keyboard module 153 waits to receive the user's touch in the key input region 124 (S550).

When the input command is not the display command (S530-N), the S/W keyboard module 153 can forward the input command to the MICOM (S560).

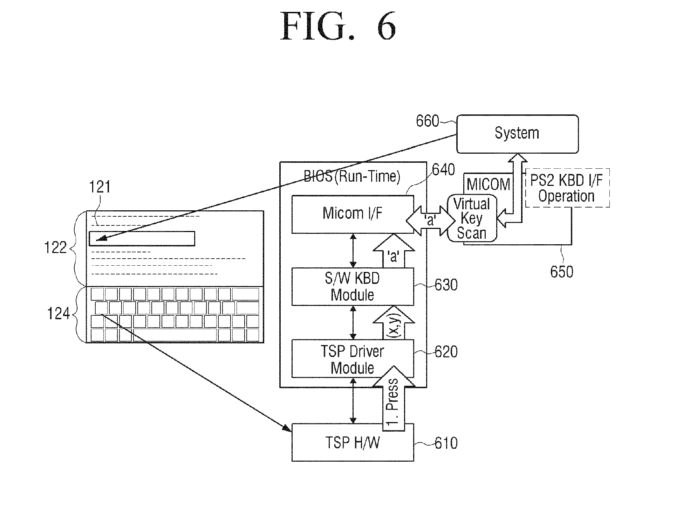

FIG. 6 is a diagram of conversion operations of the controller 150 of FIG. 1.

Referring to FIG. 6, the BIOS displays the screen keyboard on the touch screen 121 by running the run-time S/W keyboard routine, and receives a particular region of the keyboard through the touch screen 121 via a user's pressing of the TSP H/W (610).

When the particular region of the keyboard is input by a user's touch, the input coordinate value is extracted (620) and the key value corresponding to the extracted coordinate value is extracted(630).

Next, the extracted key value is sent to the conversion MICOM 650 through the MICOM interface 640, and the conversion MICOM 650 converts the received key value to the scancode and outputs the scancode to the system 660.

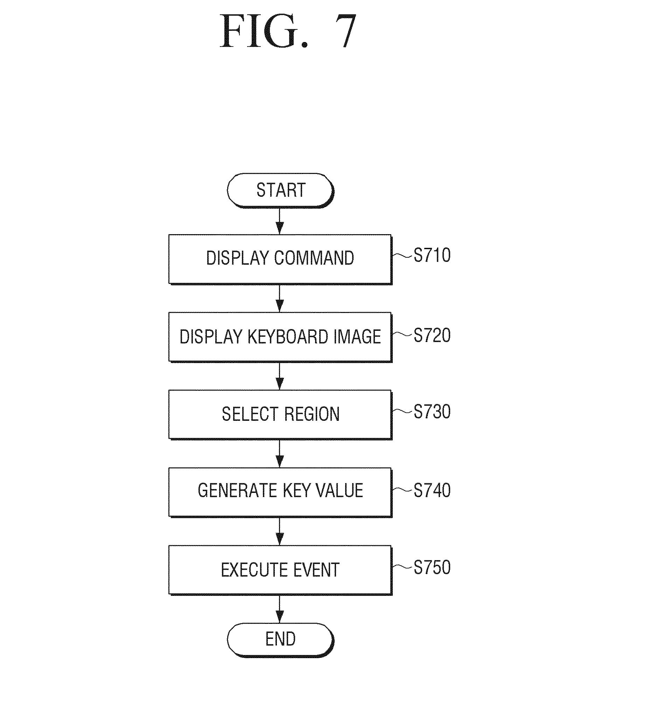

FIG. 7 is a flowchart of a key input method according to an exemplary embodiment of the present general inventive concept.

Referring to FIG. 7, the display command of the key input region is input (S710). In detail, the display command can be input through the dedicated physical key or through the touch on the preset region of the touch screen.

The key input region is displayed (S720). In detail, the key input region may include a QWERTY keyboard to be displayed in the preset position of the touch screen. The present general inventive concept is not limited to the QWERTY keyboard, and other keyboards may be displayed on the touch screen.

When the user selects a region on the displayed key input region via a touch (S730), the touch is input on the key input region, the key value corresponding to the touch region is generated, and the keyboard signal corresponding to the key value is generated (S740). The event corresponding to the generated keyboard signal can be executed (S750).

As illustrated above, the key input method displays the key input region using the hardware, and outputs and uses the keyboard signal corresponding to the touch when the touch is input in the displayed key input region. Thus, the touchscreen keyboard can be provided instead of a blank or shaded screen. The key input method of FIG. 7 can be fulfilled by the electronic apparatus 100 of FIG. 1 or other electronic apparatuses.

The present general inventive concept, such as the key input method as described above, can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

## Claims

1. An electronic apparatus comprising:
a user interface arranged to display a key input region on a touch screen;
a converter arranged to output a key value corresponding to the touch region as a keyboard signal when a touch is input on the key input region; and
a controller arranged to execute an event corresponding to the output keyboard signal.

2. The electronic apparatus of claim 1, wherein the converter is arranged to receive a keyboard signal from an external keyboard and forwards the input keyboard signal to the controller, and
the converter is arranged to receive a key value corresponding to the touch region and provides a keyboard signal corresponding to the input key value to the controller.

3. The electronic apparatus of claim 1 or 2, wherein, when a preset region is input on the touch screen, the user interface is arranged to display the key input region.

4. The electronic apparatus of claim 1 or 2, further comprising:
an input part arranged to receive a display command of the key input region using a physical switch,
wherein, when the display command is input through the input part, the user interface is arranged to display the key region.

5. The electronic apparatus of any one of claims 1 to 4, wherein the key input region is in a form of a keyboard.

6. The electronic apparatus of any one of claims 1 to 5, wherein the keyboard signal is a keyboard scancode.

7. The electronic apparatus of any one of claims 1 to 6, wherein the converter is a MICOM which supports a PS/2 interface.

8. The electronic apparatus of any one of claims 1 to 7, wherein, when the touch is input on the touch screen, the user interface is arranged to output coordinates of the touch screen of the touched region, and
the converter is arranged to extract a key value corresponding to the coordinates of the touch screen, to convert the extracted key value to a keyboard signal, and to output the keyboard signal.

9. A key input method in an electronic apparatus, comprising:
displaying a key input region on a touch screen;
inputting a touch on the key input region;
converting a key value corresponding to the touch region to a keyboard signal;
and
executing an event corresponding to the keyboard signal.

10. The key input method of claim 9, wherein, when a preset region is input on the touch screen, the displaying operation displays the key input region.

11. The key input method of claim 9, wherein, when a display command is input through using a physical switch of the electronic apparatus, the displaying operation of the key input region displays the key input region.

12. The key input method of any one of claims 9, 10 and 11, wherein the key input region is in a form of a keyboard.

13. The key input method of any one of claims 9 to 12, wherein the keyboard signal is a keyboard scancode.

14. The key input method of any one of claims 9 to 13, further comprising:
when the touch is input on the touch screen, outputting coordinates of the touch screen of the touched region; and
extracting a key value corresponding to the coordinates of the touch screen.
